# DEMANDE DE BREVET EUROPEEN

(11) **EP 2 210 493 A1**
(43) Date de publication de la demande: **28.07.2010**
(21) Numéro de dépôt: 09305063.1
(22) Date de dépôt: 23.01.2009
(51) Int. Cl.: A21B 3/04

(54) **Dispositif de production de vapeur d'eau placé dans l'enceinte de cuisson d'un four à pain**

(71) Demandeur: Bongard, 67810 Holtzheim (FR)
(72) Inventeur: Kolheb, Benoît, F-57445 REDING (FR); Born, François, F-67118 Geispolsheim (FR)
(74) Mandataire: Littolff, Denis

(57) **Abrégé**

Dispositif de production de vapeur d'eau placé dans l'enceinte de cuisson d'un four à pain, constitué d'un empilement d'éléments chauffés par le four sur lesquels s'écoule par gravité un filet d'eau qui se vaporise à leur contact.

Il se **caractérise en ce que** :
- lesdits éléments sont des blocs identiques (B ; B' ; B" ; B"') imbriqués en colonne, surmontée d'un bac supérieur répartissant l'eau devant s'écouler dans les blocs sur la totalité de la surface de la section transversale de la colonne ;
- chaque bloc (B ; B' ; B" ; B"') est constitué de n volumes périphériques (2, 2', 2") identiques reliés à un fût central (1) et agencés à 2Π/n l'un de l'autre ;
- chaque bloc (B ; B' ; B" ; B"') peut être empilé sur un autre après rotation de Π/n par rapport à l'axe de la colonne ;
- les volumes périphériques (2, 2', 2") présentent une forme extérieure comprenant d'un côté d'un plan médian transversal deux évidements (5) permettant de loger une portion de la forme qu'ils présentent de l'autre côté dudit plan, de sorte qu'ils puissent chacun coopérer avec un contact maximal avec deux volumes (2, 2', 2") périphériques de chaque bloc (B ; B' ; B" ; B"') adjacent de l'empilement ;
- lesdits volumes (2, 2', 2") sont prévus pour occuper un espace maximal dans la colonne mais préserver après empilement des interstices permettant l'écoulement de l'eau entre les blocs (B ; B' ; B" ; B"').

## Description

La présente invention a trait à un dispositif de production de vapeur d'eau placé dans l'enceinte de cuisson d'un four à pain, et constitué d'un empilement d'éléments chauffés par le four sur lesquels s'écoule par gravité un filet d'eau qui se vaporise à leur contact.

Le but est d'humidifier des pâtons destinés à devenir des pains lors des premières minutes de cuisson.

La vapeur d'eau qui se dépose sur les pâtons est en effet nécessaire à l'obtention des pains sous la forme que l'on connaît, pour plusieurs raisons tenant notamment au fait que la vapeur, lorsqu'elle se condense sur la surface des pâtons, permet la constitution d'une « peau » par interaction avec la pâte non cuite dans une atmosphère brûlante, selon un process qui correspond à la formation d'un empois d'amidon.

Le dépôt de vapeur sur les pâtons au début de la cuisson est par ailleurs également important pour l'aspect final des produits : la brillance et la coloration uniforme des pains en dépend au moins pour partie.

Pour que les pâtons placés dans un four soient tous soumis au même traitement, il importe cependant que la vapeur d'eau soit répartie de manière spatialement homogène dans l'enceinte chauffante pendant une période brève au début de la cuisson.

Dans le monde de la boulangerie, la vapeur d'eau ainsi utilisée est communément appelée buée et le dispositif qui la génère est désigné sous l'appellation appareil à buée. La vapeur ou buée est en fait simplement obtenue à partir de l'eau du réseau, versée sur des éléments disposés à l'intérieur du four et chauffés par celui-ci en vue de la produire. Lesdits éléments sont prévus en une matière à forte conductibilité thermique pour que la chaleur du four puisse les porter à une température élevée permettant l'évaporation rapide d'une eau à température du réseau.

Parmi les configurations existantes d'appareils à buée, il existe par exemple des gouttières ou tuiles métalliques disposées en chevrons sur la hauteur du four pour former un chemin d'écoulement pour l'eau. Pour permettre une évaporation correcte, les éléments de gouttière chauffés présentent une pente faible, ce qui induit cependant un déséquilibre dans la localisation de la vapeur, qui se trouve plutôt dans le haut du four dans l'hypothèse logique, car basée sur un écoulement gravitaire, d'un point d'alimentation d'eau unique en partie supérieure de l'enceinte. La solution consiste à utiliser plusieurs points d'injection à des niveaux différents, mais elle complique sensiblement la structure. Même dans ce cas, du fait de la faiblesse de la pente, la vaporisation n'est guère homogène ni dans le temps, ni dans l'espace.

Pour améliorer cette homogénéité, il a été prévu des systèmes dans lesquels l'eau investit plus rapidement la totalité de l'appareil à buée. C'est le cas dans des configurations dans lesquelles l'eau tombe par gravité sur des éléments chauffés simplement empilés en vue d'occuper un volume délimité. Ainsi, il a été proposé d'utiliser des billes en métal d'abord disposées en vrac un peu à la manière de pierres à sauna, puis agencées en chapelets regroupés dans une partie du four. Dans ce cas, l'eau arrive par en haut, et s'écoule par gravité entre les billes. L'évaporation est beaucoup plus homogène sur l'ensemble de la hauteur du four, et également dans le temps, puisque l'eau coule plus rapidement vers le bas du four.

En général, un tel dispositif de génération de buée est constitué selon un volume formant une colonne, les éléments chauffants discrets étant alors par exemple disposés dans une gaine dans laquelle circule l'air chaud produit par le four en vue de les chauffer. La température recherchée pour lesdits éléments avoisine classiquement une valeur de l'ordre de 220 °C. La puissance d'un appareil à buée est mesurable, quantifiable par sa capacité à transformer un certain volume d'eau en buée. La quantité de vapeur à produire dépend d'ailleurs des qualités de pains, et est notamment fonction des produits à cuire. Elle dépend bien évidemment aussi du volume du four.

Pour augmenter la quantité de vapeur dans la chambre de cuisson, il faut transformer plus d'eau en buée, ce qui se traduit en général par une augmentation du volume et notamment de la hauteur de la colonne. Cette augmentation ne doit cependant pas s'effectuer au détriment de la vitesse et de l'homogénéité spatiale de la production de la vapeur, dont on a expliqué auparavant l'importance. Un équilibre doit être trouvé, qui est notamment tributaire de la configuration de l'appareil à buée.

La présente invention a pour but d'optimiser ce type d'appareil à buée, et notamment d'améliorer les échanges thermiques des éléments chauffés avec l'air chaud pour mieux emmagasiner l'énergie, c'est à dire mieux absorber la chaleur, et mieux restituer ladite énergie, en fait augmenter le rendement de la transformation de l'eau en vapeur d'eau. Ces possibilités sont mises en oeuvre, dans la configuration proposée selon l'invention, sans dégrader ni la durée de vaporisation, qui reste brève à partir du moment où de l'eau s'écoule dans l'appareil à buée, ni la capacité de ce dernier à produire de la vapeur de façon spatialement homogène.

Ces objectifs, et d'autres qui seront apparents dans la suite de la description de l'invention, sont réalisés à l'aide d'un dispositif de production de vapeur d'eau de facture classique, c'est à dire constitué comme ses devanciers d'un empilement d'éléments chauffés par la chaleur du four, sur lesquels s'écoule par gravité à intervalle régulier un filet d'eau qui se vaporise à leur contact.

Les caractéristiques principales de l'invention sont les suivantes :
- lesdits éléments sont des blocs identiques imbriqués en colonne, surmontée d'un bac supérieur répartissant l'eau devant s'écouler dans les blocs sur la totalité de la surface de la section transversale de la colonne ;
- chaque bloc est constitué de n volumes périphériques identiques reliés à un fût central et agencés à 2Π/n l'un de l'autre ;
- chaque bloc peut être empilé sur un autre après rotation de Π/n par rapport à l'axe de la colonne ;
- les volumes périphériques présentent une forme extérieure comprenant d'un côté d'un plan médian transversal deux évidements permettant de loger une portion de la forme qu'ils présentent de l'autre côté dudit plan, de sorte qu'ils puissent chacun coopérer avec un contact maximal avec deux volumes périphériques de chaque bloc adjacent de l'empilement ;
- lesdits volumes sont prévus pour occuper un espace maximal dans la colonne mais préserver après empilement des interstices permettant l'écoulement rapide de l'eau entre les blocs.

L'emboîtement après rotation, ainsi que la forme des volumes, sont conçus pour permettre un rendement maximal dans l'absorption de l'énergie, mais également dans sa restitution sous forme de vapeur d'eau.

Le but est de permettre et de favoriser des ponts thermiques améliorant les échanges et augmentant par conséquent le rendement thermique de l'ensemble.

Pour améliorer encore les échanges thermiques, chaque volume est muni d'un bouclier périphérique constitué d'une paroi distincte dudit volume et qui lui est relié dans sa partie médiane, couvrant un secteur angulaire au plus égal à Π/n. Selon une possibilité qui améliore les échanges de calories entre blocs, les évidements permettent de loger sans vide les portions de volume d'un bloc adjacent.

Dans le but d'améliorer encore les échanges, l'une des solutions consiste à augmenter autant que possible les surfaces externes, qu'elles permettent le contact avec l'air ambiant, l'eau ou d'autres pièces métalliques : à cet égard, les surfaces extérieures des volumes périphériques et des boucliers sont rainurées ou nervurées.

Selon une configuration possible de l'invention, choisie pour sa bonne adéquation aux objectifs poursuivis, ces volumes périphériques sont ovoïdes dotés d'un côté du plan de symétrie de deux cavités prévues pour loger les portions de deux ovoïdes périphériques successifs d'un bloc adjacent après empilement. Cette forme constitue un bon exemple de volume dont la surface est importante par rapport à l'encombrement, tout en permettant des emboîtements n'empêchant pas la création d'interstices de passage pour l'eau qui s'écoule par gravité.

Toujours dans le but de limiter toute forme de pertes, la paroi des boucliers est d'allure cylindrique avec de préférence des dépouilles axiales de faible inclinaison sur leur face extérieure. En d'autres termes, ladite face présente deux inclinaisons se rejoignant en son milieu, ce qui permet de canaliser l'eau qui s'écoule vers la périphérie de la colonne vers l'intérieur de celle-ci pour éviter d'éventuelles projections d'eau dans le four. L'objectif est que la totalité ou en tout cas le volume maximal d'eau injecté soit utilisé ou préservé pour la production de vapeur. Les boucliers présentent donc une symétrie par rapport à un plan médian transversal.

Il est primordial que l'eau non transformée en vapeur au contact d'un bloc puisse s'écouler le plus rapidement possible sur le bloc suivant car, en prenant de l'énergie calorifique du premier bloc, elle refroidit la surface de ce dernier qui n'est plus guère efficient, en termes de transfert d'énergie. Il faut donc évacuer ladite surface afin que la chaleur du coeur du bloc puisse diffuser vers l'extérieur et réchauffer la surface, la rendant à nouveau apte à un transfert thermique pour l'écoulement d'eau suivant.

Lors de cycles normaux d'écoulement, alternant par exemple une injection d'eau pendant 2 s et un arrêt de l'injection pendant 2 s, les périodes d'arrêt de l'écoulement sont mises à profit par le dispositif pour réchauffer la surface des blocs au moyen de cette diffusion de chaleur vers l'extérieur, jusqu'à épuisement de l'énergie emmagasinée. Un réchauffage des blocs se produit pendant la cuisson du pain.

Selon une possibilité, chaque bouclier est relié à un volume périphérique via un bourrelet annulaire.

La forme des blocs, avec les volumes ovoïdaux s'emboîtant les uns dans les autres par rotations successives d'angles égaux réalisées au niveau de chaque bloc, a notamment pour résultat que l'eau ne peut en réalité pas descendre directement, c'est à dire sans contact avec un élément d'un bloc, vers le bac de récupération qui est placé en bas de la colonne.

Pratiquement toutes les caractéristiques mises en oeuvre dans l'appareil à buée de l'invention ont plusieurs fonctions. Ainsi en va-t-il des nervures/rainures, qui permettent certes à titre principal d'augmenter la surface extérieure des volumes et donc d'optimiser le rendement thermique, mais également de canaliser l'eau vers le bas. Cela est également vrai pour les boucliers périphériques, qui augmentent la surface d'échange et permettent par conséquent d'améliorer la montée en température de l'appareil, et qui ont dans le même temps une fonction de canalisation de l'écoulement d'eau non vaporisée à l'intérieur de la colonne. L'eau projetée vers l'extérieur pendant la première phase d'évaporation est ainsi maintenue dans la colonne, en vue d'être mise au contact des blocs inférieurs.

L'existence des blocs identiques superposés permet de faire varier aisément la hauteur de l'appareil de buée, et donc de l'adapter facilement au four dans lequel il est implanté. Les blocs empilables permettent par ailleurs un montage simple, modulable et rapide de l'appareil à buée dans n'importe quelle enceinte de four.

De préférence, les blocs sont fabriqués en fonte, matériau métallique qui présente des caractéristiques de conductibilité thermique appropriées.

L'invention va à présent être décrite plus en détails, en référence aux figures, pour lesquelles :
- la figure 1 est une vue en perspective d'un bloc selon l'invention ;
- la figure 2 représente, toujours en perspective, un empilement de quelques blocs ; et
- la figure 3 représente une vue de dessus de la colonne de l'appareil à buée lorsqu'elle est constituée.

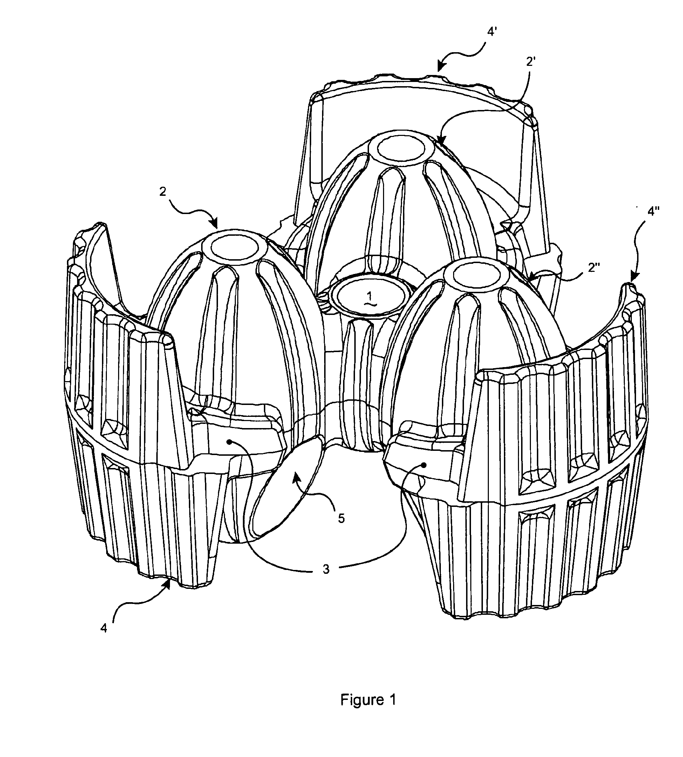

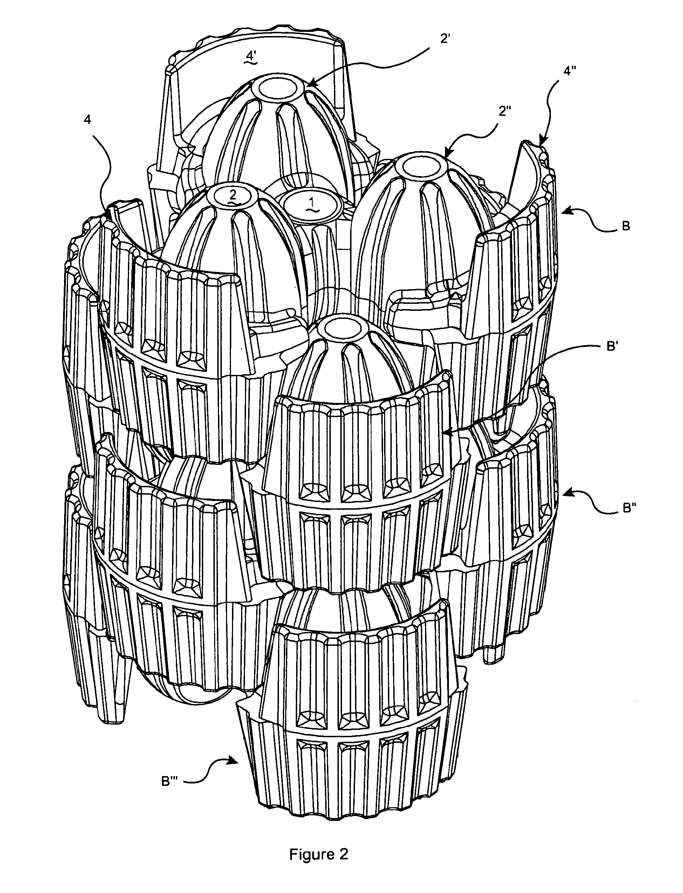

En référence à la figure 1, chaque bloc se compose d'un fût central (1), de volumes périphériques (2, 2', 2") chacun relié par un bourrelet annulaire semi-circulaire (3) à des boucliers externes (4, 4', 4"). Les volumes (2, 2', 2"), au nombre de trois dans l'exemple présenté dans la figure 1, sont par conséquent disposés à 2Π/3 l'un de l'autre. Ils sont munis de rainures externes, de la même manière que les boucliers (4, 4', 4") sont dotés de rainures externes, ce qui augmente leur surface d'échange avec l'air et l'eau, et améliore au final le rendement de l'échangeur thermique qu'ils constituent. Les volumes (2, 2', 2") sont par ailleurs munis de cavités (5) disposées de telle sorte qu'elles permettent l'emboîtement de deux blocs adjacents, de la manière qui est représentée en figure 2. L'empilement d'un second bloc identique à celui de la figure 1, sur celui qui y est représenté, nécessite simplement sa rotation d'un angle Π/3, de telle sorte que les volumes (2, 2', 2") puissent venir s'imbriquer dans les cavités (5). Les boucliers (4, 4', 4"), qui obéissent à la même périodicité angulaire, s'intercalent alors de manière à créer une sorte de crénelage. L'empilement peut ainsi être reproduit ad *libitum*, ce qui permet d'obtenir une colonne de hauteur variable.

La figure 2, qui représente un empilement de blocs (B ; B' ; B" ; B"') constituant en fait un appareil de buée, fait apparaître plus clairement une des caractéristiques de l'invention : les faces extérieures des boucliers (4, 4', 4") comportent des dépouilles inclinées de manière inversée se rejoignant au niveau du plan médian transversal de chaque bloc, qui constitue en l'espèce un plan de symétrie. Cette caractéristique permet de canaliser l'eau en provenance de la partie supérieure de l'appareil de buée (distribuée par un bac non représenté qui la distribue de la manière la plus uniforme possible de la surface transversale) de sorte que l'eau ne sorte pas de l'appareil à buée et qu'elle s'écoule au contraire par gravité en restant au contact des volumes métalliques formant chaque bloc (B ; B' ; B" ; B"').

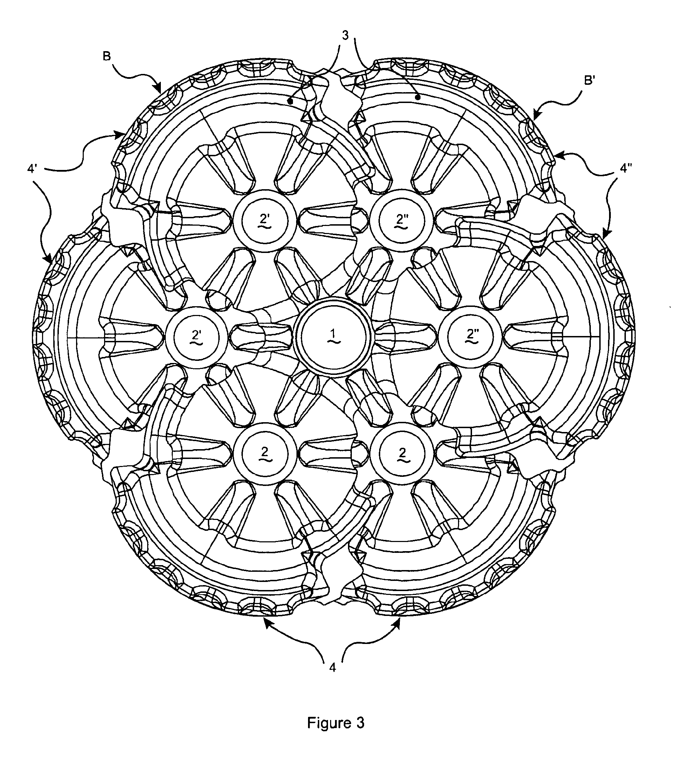

La forme ovoïde des volumes (2, 2', 2"), les interstices que cette forme laisse subsister lorsqu'il y a empilement des différents blocs (voir en figure 3), les canalisations obtenues par le nervurage/rainurage etc., sont autant de caractéristiques qui permettent un écoulement homogène et rapide de l'eau se dirigeant par gravité de haut en bas de la colonne, et garantissant une production de vapeur qui tend également à être homogène sur toute la hauteur de l'enceinte de chauffage du four. Cela n'est bien entendu possible que si la totalité des blocs (B ; B' ; B" ; B"') empilés est également chauffée de la manière la plus homogène possible, ce à quoi concourent les différentes formes conférées aux boucliers (4 ; 4' ; 4") d'une part (échangeurs externes) et aux volumes (2 ; 2' ; 2") d'autre part, ces derniers étant de plus prévus comme on l'a mentionné pour optimiser les échanges de chaleur interne entre blocs (B ; B' ; B" ; B"') et volumes (2, 2', 2"). A cet égard, le choix de volumes ovoïdaux constitués de deux ogives quasi symétriques munies de surfaces emboîtables (5) permet de faciliter l'empilement, et assure une surface de contact maximale encore augmentée vers l'extérieur par l'existence des nervures, tout en préservant des possibilités d'écoulement intérieur.

La configuration montrée, très spécifique aux blocs de l'invention, garantit une optimisation de pratiquement toutes les étapes fonctionnelles nécessaires à la production de vapeur, celle-ci étant au surplus réalisable en un temps bref dans la totalité du volume du four.

## Revendications

1. Dispositif de production de vapeur d'eau placé dans l'enceinte de cuisson d'un four à pain, constitué d'un empilement d'éléments chauffés par le four sur lesquels s'écoule par gravité un filet d'eau qui se vaporise à leur contact, **caractérisé en ce que :**
- lesdits éléments sont des blocs identiques (B ; B' ; B" ; B"') imbriqués en colonne, surmontée d'un bac supérieur répartissant l'eau devant s'écouler dans les blocs sur la totalité de la surface de la section transversale de la colonne ;
- chaque bloc (B ; B' ; B" ; B"') est constitué de n volumes périphériques (2, 2', 2") identiques reliés à un fût central (1) et agencés à 2Π/n l'un de l'autre ;
- chaque bloc (B ; B' ; B" ; B"') peut être empilé sur un autre après rotation de Π/n par rapport à l'axe de la colonne;
- les volumes périphériques (2, 2', 2") présentent une forme extérieure comprenant d'un côté d'un plan médian transversal deux évidements (5) permettant de loger une portion de la forme qu'ils présentent de l'autre côté dudit plan, de sorte qu'ils puissent chacun coopérer avec un contact maximal avec deux volumes (2, 2', 2") périphériques de chaque bloc (B ; B' ; B" ; B"') adjacent de l'empilement ;
- lesdits volumes (2, 2', 2") sont prévus pour occuper un espace maximal dans la colonne mais préserver après empilement des interstices permettant l'écoulement de l'eau entre les blocs (B ; B' ; B" ; B"').

2. Dispositif de production de vapeur d'eau selon la revendication précédente, **caractérisé en ce que** chaque volume (2, 2', 2") est muni d'un bouclier périphérique (4, 4', 4") constitué d'une paroi distincte dudit volume (2, 2', 2") et qui lui est relié dans sa partie médiane, couvrant un secteur angulaire au plus égal à Π/n.

3. Dispositif de production de vapeur d'eau selon l'une des revendications précédentes, **caractérisé en ce que** les évidements (5) permettent de loger sans vide les portions de volume (2, 2', 2") d'un bloc (B ; B' ; B" ; B"') adjacent.

4. Dispositif de production de vapeur d'eau selon l'une des revendications précédentes, **caractérisé en ce que** les surfaces extérieures des volumes périphériques (2, 2', 2") et des boucliers (4, 4', 4") sont rainurées ou nervurées.

5. Dispositif de production de vapeur d'eau selon l'une des revendications précédentes, **caractérisé en ce que** les volumes (2, 2', 2") sont ovoïdes dotés d'un côté du plan de symétrie de deux cavités (5) prévues pour loger les portions de deux ovoïdes (2, 2', 2") périphériques successifs d'un bloc adjacent après empilement.

6. Dispositif de production de vapeur d'eau selon l'une des revendications précédentes, **caractérisé en ce que** la paroi des boucliers (4, 4', 4") est d'allure cylindrique avec des dépouilles axiales de faible inclinaison sur leur face extérieure.

7. Dispositif de production de vapeur d'eau selon l'une des revendications précédentes, **caractérisé en ce que** chaque bouclier (4, 4', 4") est relié à un volume périphérique (2, 2', 2") via un bourrelet annulaire (3).

8. Dispositif de production de vapeur d'eau selon l'une des revendications précédentes, **caractérisé en ce que** les blocs sont fabriqués en fonte.
